(19) Europäisches Patentamt
European Patent Office
Office européen des brevets

(11) Publication number : **0 535 908 A1**

(12) # EUROPEAN PATENT APPLICATION

(21) Application number : **92308851.2**

(22) Date of filing : **29.09.92**

(51) Int. Cl.$^5$ : **C08L 67/02,** C08L 69/00, C08L 55/02

(30) Priority : **01.10.91 US 769297**

(43) Date of publication of application : **07.04.93 Bulletin 93/14**

(84) Designated Contracting States : **DE FR GB IT NL**

(71) Applicant : **GENERAL ELECTRIC COMPANY**
**1 River Road**
**Schenectady, NY 12345 (US)**

(72) Inventor : **Wang, I-Chung Wayne**
**5121 Glenbrook Drive**
**Vienna, West Virginia 26105 (US)**

(74) Representative : **Pratt, Richard Wilson et al**
**London Patent Operation G.E. Technical Services Co. Inc. Essex House 12/13 Essex Street**
**London WC2R 3AA (GB)**

(54) **Polyester/polycarbonate molding compositions.**

(57) Pigmented and unpigmented impact resistant and gasoline staining resistant compositions are provided which comprise a polyester resin and/or a polycarbonate resin modified with a conjugated diolefin-based substrate-vinyl cyanide/alkenyl aromatic superstrate grafted copolymer having an agglomerated substrate with a volume average mean diameter ranging from about 80 nm to about 450 nm. The pigmented compositions also present increased uniformity in color.

EP 0 535 908 A1

## FIELD OF THE INVENTION

This invention relates to impact resistant and gasoline staining resistant compositions comprised of (A) a polyester resin, a polycarbonate resin, or a mixture thereof; and (B) a conjugated diolefin-based substrate-vinyl cyanide/alkenyl aromatic superstrate grafted copolymer having an agglomerated substrate with a volume average mean diameter ranging from about 80 nm to about 450 nm, and preferably from about 80 nm to less than 250 nm. Pigmented compositions are contemplated as well. These unpigmented and pigmented compositions possess high impact strength and improved gasoline staining resistance. The pigmented compositions also present increased uniformity in color.

## BACKGROUND OF THE INVENTION

Polyesters and particularly linear polyesters such as polyethylene terephthalate and polybutylene terephthalate are widely used as engineering resins because of their thermal and dimensional stability and low moisture absorption. However, in order to improve the impact of molded polyester articles, it has been necessary to blend the polyesters with other resins such as polycarbonates. Polycarbonate resin compositions are widely used because of their excellent impact properties. Although these thermoplastic resins alone or in blends as above have been found to have slightly improved impact properties at ambient temperatures, these improvements decrease substantially at low temperatures. Additionally, these blends are subject to gasoline staining and to heterogeneous dispersion of added pigments.

European Patent Application No. 0,307,802 discloses thermoplastic resin compositions containing polypropylene; an aromatic polyester resin, a polycarbonate resin, a polyamide resin, a polyphenylene ether resin or a mixture of the foregoing with a styrene polymer and an acrylonitrile butadiene styrene (ABS) resin in addition to a multiphase thermoplastic resin comprising a polyolefin and a vinyl polymer or copolymer. Either component of the latter modifier has a particle diameter of 1 to 10,000 nm. These compositions are claimed to have enhanced moldability, chemical resistance, heat resistance, mechanical properties, stiffness, impact strength and coating properties.

Wang, U.S. Patent No. 4,753,986, discloses low temperature impact modified compositions comprising a linear polyester and a cross-linked, acid agglomerated elastomer polymer of at least one conjugated diene having a substantially uniform particle size and a volume average particle size in the range of from about 80 to 700 nm and a grafted shell of a vinyl aromatic and at least one polymerizable nitrile. Polycarbonates are not added to these compositions, and gasoline stain resistance is not stated to be improved. Additionally, those compositions with modifiers having relatively small particle size do not exhibit impact properties at low temperatures and criticality of relatively high volume average particle size is important.

Mixtures of polycarbonates, polyesters, ABS resins, a nucleating agent, and a foaming agent are disclosed in Allen et al, U.S. Patent No. 4,683,247.

Japanese Patent Publication No. 62-185743 discloses resin compositions comprising an aromatic polycarbonate, a thermoplastic polyester, a rubber containing thermoplastic resin which may be an ABS resin, and an electro-conductive carbon black. There is no criticality of particle size in the modifier.

Binsack et al, U.S. Patent No. 4,535,124, refer to low temperature impact modified impact thermoplastic molding compositions comprising thermoplastic polyesters and grafted, partially or highly cross-linked diene rubbers and/or acrylate rubber having a bimodal rubber particle size distribution. Binsack et al demonstrate an equivalence in the use of diene rubber-based and acrylate rubber-based modifiers which is contradicted in the present invention.

Chung et al, U.S. Patent No. 4,522,979, require the presence of a blocked polyisocyanate prepolymer to improve the impact resistance and gasoline stain resistance of modified polyester/polycarbonate blends. The reference also suggests the equivalence of ABS and acrylate-based modifiers.

Polycarbonate, a conjugated diene rubber reinforcing polyester (ABS resin) and an ester-ether type polyester elastomer are mixed and molded in Japanese Patent Publication No. 60-219250. The ABS resin is found to improve heat resistance and impact strength.

European Patent Application No. 0,132,339 deals with pearlescence by incorporating a multi-stage (styrenic core/soft shell/rigid outer shell) modifier in a polyester/ polycarbonate composition. The modifiers therein are not disclosed to enhance gasoline stain resistance.

Ohara et al, U.S. Patent Nos. 4,427,829 and 4,384,076, combine a polycarbonate resin, a polymethylpentene resin, an acrylic graft copolymer having butadiene has a comonomer, and an isobutylene copolymer rubber to achieve gaeoline resistance and impact strength.

Japanese Patent Publication No. 58-162655 discloses resinous compositions of poly(butylene terephthalate) optionally mixed with ABS, polycarbonate and/or other specific thermoplastic resins, and inorganic filler

having a bimodal particle size distribution of from 200 to 1000 nm and less than 200 nm.

The multi-axial stress of thermoplastic polyester molding compositions can be improved by the addition of graft copolymers having diene rubber core surrounded by at least two different shells as explained in Linder et al, U.S. Patent No. 4,417,026.

Binsack et al, U.S. Patent No. 4,292,233, disclose the improvement of toughness and multi-axial impact strength of poly(butylene terephthalate) by the addition of a high graft-base content ABS polymer, the ABS polymer having an average particle diameter of 200 to 600 nm.

Fromuth et al, U.S. Patent No. 4,180,494, disclose compositions comprising an aromatic polyester, an aromatic polycarbonate, and a butadiene-based core-shell polymer. There is no indication of rubber size.

Multi-stage polymers having a rubbery first stage and an epoxy group containing hard final stage are added to poly(alkylene terephthalate) by Lane, U.S. Patent No. 4,034,003.

Kudo et al, U.S. Patent Nos. 4,016,221 and 3,954,903, disclose mixing an ABS resin having relatively large rubber particle sizes of from 500 to 2000 nm with straight chain saturated polyesters to impart impact resistance.

Aromatic polyester and aromatic polycarbonate blends are modified with butadiene polymer-vinyl monomer graft copolymers by Nakamura et al, U.S. Patent No. 3,864,428. The problems of pearlescence and homogeneity of color appearance on the surface of molded articles and of particle size are not addressed.

The present invention provides impact resistant and gasoline staining resistant compositions comprising polyester resins and/or polycarbonate resins modified with conjugated diolefin-based substrate-vinyl cyanide/alkylene aromatic superstrate grafted copolymers having an agglomerated substrate with a volume average particle size ranging from about 80 nm to about 450 nm. The relatively small volume average substrate particle size enhances homogeneity and decreases pearlescence in pigmented compositions. Impact strength particularly at low temperatures and resistance to gasoline staining are also enhanced. Furthermore, other desirable properties of the compositions are maintained.

## SUMMARY OF THE INVENTION

According to the present invention, there are provided impact resistant and gasoline staining resistant compositions comprising (A) a polyester resin, a polycarbonate resin or a mixture thereof; and (B) a conjugated diolefin-based substrate-vinyl cyanide/alkenyl aromatic superstrate stage grafted copolymer having an agglomerated substrate with a volume average mean diameter ranging from about 80 nm to 450 nm.

In a preferred embodiment, the volume average substrate particle size ranges from about 80 nm to less than 250 nm.

Also contemplated by the invention are compositions as described above further comprising (C) at least one pigment.

## DETAILED DESCRIPTION OF THE INVENTION

The polyester resins useful in the present invention can be either saturated or unsaturated, but preferably are saturated. The polyesters can be derived from an aliphatic or cycloaliphatic diol, or mixtures thereof, containing from 2 to about 10 carbon atoms and at least one dicarboxylic acid. Preferred polyesters are derived from an aliphatic diol and an aromatic dicarboxylic acid and have repeated units of the following general formula:

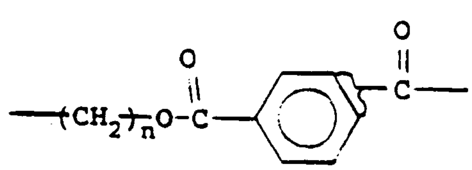

wherein n is an integer of from 2 to 4. The most preferred polyesters are poly(ethylene terephthalate) and poly(1,4-butylene terephthalate).

Also contemplated herein are the above polyesters with minor amounts, e. g., from 0.5 to about 2 percent by weight, of units derived from aliphatic acid and/or aliphatic polyols, to form copolyesters. The aliphatic polyols include glycols, such as poly(ethylene glycol). All such polyesters can be made following the teachings of, for example, U.S. Patent Nos. 2,465,319 and 3,047,539.

The polyesters which are derived from a cycloaliphatic diol and an aromatic dicarboxylic acid are prepared,

for example, by condensing either the cis- or trans-isomer (or mixtures thereof) of, for example, 1,4-cyclohexanedimethanol with an aromatic dicarboxylic acid so as to produce a polyester having recurring units of the following formula:

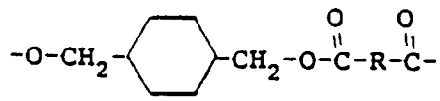

wherein the cyclohexane ring is selected from the cis- and trans-isomers thereof and R represents an aryl radical containing 6 to 20 carbon atoms and which is the decarboxylated residue derived from an aromatic dicarboxylic acid.

Examples of aromatic dicarboxylic acids represented by the decarboxylated residue R are isophthalic or terephthalic acid, 1,2-di-(p-carboxyphenyl) ethane, 4,4'-dicarboxyldiphenyl ether, etc., and mixtures of these. All of these acids contain at least one aromatic nucleus. Acids containing fused rings can also be present, such as in 1,4- or 1,5-naphthalenedicarboxylic acids. The preferred dicarboxylic acids are terephthalic acid or a mixture of terephthalic and isophthalic acids.

Another preferred polyester may be derived from the reaction of either the cis- or trans-isomer (or a mixture thereof) of 1,4-cyclohexanedimethanol with a mixture of isophthalic and terephthalic acids. Such a polyester would have repeating units of the formula:

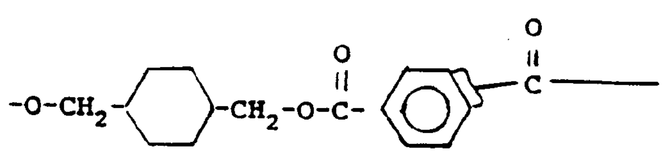

Still another preferred polyester is a copolyester derived from a cyclohexanedimethanol, an alkylene glycol and an aromatic dicarboxylic acid. These copolyesters are prepared by condensing either the cis- or trans-isomer (or mixtures thereof) of, for example, 1,4-cyclohexanedimethanol and an alkylene glycol with an aromatic dicarboxylic acid so as to produce a copolyester having units of the following formula:

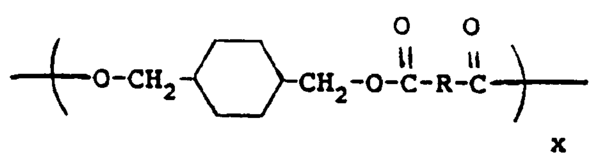

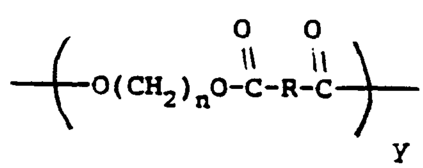

wherein the cyclohexane ring is selected from the cis- and trans-isomers thereof, R is as previously defined, n is an integer of 2 to 4, the x units comprise from about 10 to about 90 percent by weight and the y units comprise from about 90 to about 10 percent by weight.

Such a preferred copolyester may be derived from the reaction of either the cis- or trans-isomer (or mixtures thereof) of 1,4-cyclohexanedimethanol and ethylene glycol with terephthalic acid in a molar ratio of 1:2:3. These copolyesters have repeating units of the following formula:

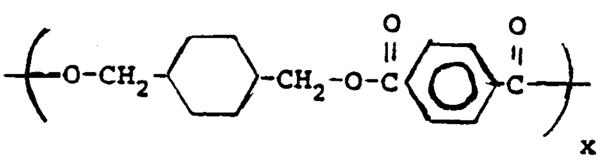

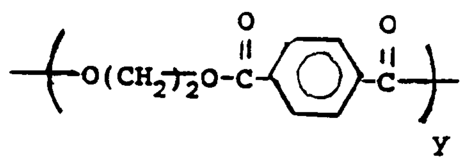

wherein x and y are as previously defined.

The polyesters described herein are either commercially available or can be produced by methods well known in the art, such as those set forth in, for example, U.S. Patent No. 2,901,466.

The polyesters used herein preferably have an intrinsic viscosity of from about 0.4 to about 2.0 dl/g as measured in a 60: 40 phenol: tetrachloroethane mixture or similar solvent at 23°C-30°C.

The polycarbonate resin in the present invention is produced by using a dihydroxydiarylalkane as the main starting arterial and optionally has branched chains. Such polycarbonate resins are manufactured by known processes and generally by the reaction of a dihydroxy compound and/or a polyhydroxy compound with either phosgene or a diester of carbonic acid. Suitable dihydroxydiarylalkanes include those having at least one alkyl group, chlorine atom, or bromine atom in any of the positions ortho to the hydroxyl groups. Preferred examples of the dihydroxydiarylalkane include 4,4′-dihydroxy-2,2-diphenylpropane-(bisphenol-A); tetramethyl(bisphenol-A); and bis-(4-hydroxyphenyl)-p-diisopropylbenzene. The branched polycarbonate resin can be produced, for instance, by the above-mentioned reaction but using, for example, 0.2 to 2 mole percent of a polyhydroxy compound in place of a part of the dihydroxy compound. Examples of the polyhydroxy compound include 1,4-bis-(4′,4,2-dihydroxytriphenylmethyl)benzene; phloroglucinol; 4,6-dimethyl-2,4,6-tris-(4-hydroxyphenyl)heptene-2; 4,6-dimethyl-2,4,6-tris-(4-hydroxyphenyl)heptane,1,3,5-tris-(4-hydroxyphenyl)benzene; 1,1,1-tris-(4-hydroxyphenyl)ethane; and 2,2,-bis-(4,4-(4,4′-dihydroxyphenyl)-cyclohexyl)propane. Particularly preferred polycarbonate resins are of the bisphenol-A type.

The graft copolymer modifiers of the present invention are impact modifiers which are well known to those skilled in the art and are represented principally by graft copolymers having a conjugated diolefin-based substrate and vinyl cyanide/alkenyl aromatic superstrate. They are commonly known as ABS modifiers. They particularly comprise acrylonitrile-butadiene-styrene graft copolymers, but also encompass mixtures of analogous materials.

Such impact modifiers are prepared by grafting particular ratios of styrene and acrylonitrile on butadiene-based rubber substrates.

Specifically, these impact modifiers are graft copolymer resins prepared by graft polymerizing particular ratios of styrene and acrylonitrile superstrate in the presence of particular butadiene-based rubber substrates, including styrene/butadiene rubber substrates.

The butadiene-based rubber substrates useful in preparing such impact modifiers preferably are agglomerated polymers of butadiene which optionally include up to 35 weight percent in total of styrene, and/or acrylonitrile, and/or an alkyl acrylate in which the alkyl group contains 4 or more carbon atoms. The rubber substrate may further include up to 5 weight percent of additional copolymerizable cross-linking monomers such as divinylbenzene, triallylcyanurate or the like, up to 2 weight percent of chain transfer agents, such as tertiary dodecyl mercaptan, and up to 2 weight percent of graft enhancers such as allyl (meth)acrylate, diallylmaleate and the like. Diene polymer and copolymer rubbers are well known and are widely employed commercially for a number of purposes. The preparation of such rubbers may be accomplished by any of a variety of processes well known and conventionally used. Particularly used are emulsion polymerization processes which provide the rubber in latex form suitable for use in subsequent agglomeration processes to achieve various desired particle sizes.

The preferred ABS-type impact modifiers are prepared by graft polymerizing a superstrate of from about 40 to about 70, and preferably from 47 to 61 parts by weight of a grafting monomer mixture comprising a monovinyl aromatic compound (MVA), such as styrene, alpha methyl styrene, p-methyl styrene or a combination thereof and an ethylenically unsaturated nitrile (EUN) such as acrylonitrile and/or methacrylonitrile in the presence of 100 parts by weight of an agglomerated butadiene-based rubber substrate. The impact modifier is thus a high rubber graft copolymer having a rubber content of from about 50 to about 85 weight percent, preferably

from 60 to 80 weight percent, and correspondingly, a graft monomer component or superstrate stage of from 50 to 15, preferably from 40 to 20 weight percent.

The weight ratio of the MVA to the EUN in the grafting monomer mixture will be in the range of from 2:1 to 5:1, and preferably, from 3:1 to 4:1.

This graft polymerization of the MVA/EUN monomer mixture in the presence of the agglomerated rubbery substrate may be carried out by any of the graft polymerization processes well known and widely used in the polymerization art for preparing ABS resins, including emulsion, suspension, and bulk processes. Typical of such processes are emulsion graft polymerization processes wherein the grafting monomers are added together with surfactants and chain transfer agents as desired, to an emulsion latex of the rubbery substrate and polymerized using an initiator. The initiator may be any of the commonly used free-radical generators including peroxides such as dicumyl peroxide or azo initiators such as azobisisobutyronitrile. Alternatively, any of the variety of redox polymerization catalysts such as the combination of cumene hydroperoxide with ferrous sulfate and sodium formaldehyde sulfoxylate which are well known and widely used in such processes may be employed. The graft polymerization process used in the preparation of the ABS impact modifiers, as well as those processes used in coagulating and isolating the ABS impact modifier for further use, are thus well known and conventional, and the application of such processes to the preparation of the ABS impact modifiers for further use, are thus well known, conventional, and apparent to those skilled in the art.

The ABS impact modifier suitable for use in the present invention may also comprise a styrenic polymer which comprises a rigid portion and a rubber portion. The rigid portion is formed from at least two ethylenically unsaturated monomers, one of which comprises styrene and/or substituted styrene. Preferred substituted styrenes include, but are not limited to, halogen-substituted styrene, particularly wherein the halogen is substituted on the aromatic ring; alpha-methyl styrene and para-methyl styrene. The other ethylenically unsaturated monomer which is used in forming the rigid portion may be selected from acrylonitrile, substituted acrylonitriles, acrylates, alkyl-substituted acrylates, methacrylates, alkyl-substituted (meth)acrylates, and ethylenically unsaturated carboxylic acids, diacids, dianhydrides, acid esters, diacid esters, amides, imides and alkyl- and aryl-substituted imides. Preferably, the second monomer which is used to form the rigid portion is selected from the group consisting of acrylonitrile, methacrylonitrile, alkyl (meth)acrylates, maleic anhydride, maleimide, alkyl maleimides, aryl maleimides, and mixtures thereof. It is further preferred that the rigid portion is formed from about 60 to about 95 weight percent, and more preferably 60 to 80 weight percent of the styrene and/or substituted styrene monomers and from about 5 to about 40 weight percent and more preferably 20 to 40 weight percent, of the second monomer.

The rubber portion may be formed from polymers or copolymers of one or more conjugated dienes, copolymers of conjugated dienes and non-diene vinyl monomers, alkyl acrylate polymers, and copolymers of ethylenically unsaturated olefins and non-conjugated diene polymers (EPDM) rubbers. A preferred rubber portion includes polybutadiene.

The styrenic polymer component may be formed such that the rigid portion is grafted to the rubber portion. Alternatively, the rigid portion may be blended with the rubber portion. When the rigid portion is blended with the rubber portion, it is preferred that the rubber portion has been previously grafted with one or more grafting monomers. Accordingly, the styrenic polymer component may be so produced by any method known in the art, for example, emulsion, bulk, mass or suspension polymerization processes. It is preferred that the styrenic polymer component contains from about 10 to 90 weight percent of the rubber portion and from about 10 to 90 weight percent of the rigid portion, based on the rubber portion and the rigid portion. More preferably, the styrenic polymer component comprises from about 40 to about 80 weight percent of the rubber portion and from about 20 to about 60 weight percent of the rigid portion, based on the rubber portion and the rigid portion.

Most preferably, the ABS modifier will comprise a terpolymer of acrylonitrile (AN), butadiene (BD) and styrene (S) having an S to AN ratio of from about 5:1 to 2:1 and most preferably 3.5:1, 3.0:1 or 2.5:1, and a BD to S/AN ratio of from 6:4 to 9:1 and wherein the butadiene comprises the substrate and the styrene and acrylonitrile comprise the superstrate.

Suitable commercially available ABS modifiers are available under the tradename BLENDEX® from General Electric Company.

The substrate to superstrate ratio and the vinyl cyanide to alkyl aromatic ratio in the superstrate are designed to have a reflective index near that of the blend to which the modifier is to be added to assist in the reduction of pearlescence and in the improvement of the visual appearance of the intensity of color in molded articles prepared from the pigmented compositions of the present invention. Pearlescence is the non-uniform mother-of-pearl appearance of the molded articles.

The volume average particle size of the modifier substrate is enlarged by an agglomeration process with a final mean diameter ranging from about 80 nm to about 450 nm. It preferably ranges from about 80 nm to less than 250 nm. The agglomeration can be achieved either mechanically by pressurization or chemically by

acids or electrolytes.

The thermoplastic resin(s) (A) of the present invention typically comprise from about 1 to about 99 parts by weight, and preferably from about 5 to about 95 parts by weight, and most preferably from about 80 to about 92.5 parts by weight based upon 100 parts of polyester, polycarbonate, or polyester and polycarbonate, and modifier combined. Correspondingly, the ABS modifier (B) of the present invention comprise from about 99 to 1 part by weight based upon 100 parts by weight of the thermoplastic resin and the modifier combined and preferably from about 95 to about 5 parts by weight on the same basis and most preferably from about 20 to about 7.5 parts by weight on the same basis.

Special mention is made of blends comprising the compositions of the present invention. Additionally, the compositions of the present invention may be molded, extruded, or thermoformed into articles by conventional methods known to one of ordinary skill in the art.

Conventional processes for mixing thermoplastic polymers can be used for the manufacture of compositions of the present invention. For example, the compositions can be manufactured using any suitable mixing equipment, co-kneaders, or extruders under conditions known to one of ordinary skill in the art.

Conventional reactive or unreactive UV screeners such as benzotriazole and its derivatives may be incorporated into the modifier during the process of preparing these graft polymers or compositions in order to provide enhanced weatherability of the molding compositions of the present invention.

## DESCRIPTION OF THE PREFERRED EMBODIMENTS

The following examples illustrate the invention without limitation. All parts are given by weight unless otherwise indicated.

Impact strengths are reported as notched Izod according to ASTM D-256 at room temperature (23°C) unless otherwise specified and as ductile-brittle transition temperature. Gasoline staining is reported as ΔL*ab according to DIN-6174, the color difference between gasoline immersed and non-immersed portions of a 5x5 cm plaque half immersed in a solution of 42.5/42.5/5 v/v/v toluene/isooctane/methanol for 6 minutes followed by 24 hours of drying at ambient conditions. Pearlescence is visually noted on a scale of 1, (best) with no shift, to 5 (worst), with readily visible color inhomogenicity, after inspection in a McBeth-spectralight cabinet.

## PROCEDURE A

An emulsion of 175.0 parts of butadiene, 2.5 parts of sodium pyrophosphate, 1.0 part of glucose, 0.05 part of ferrous sulfate, 4.0 parts of sodium oleate emulsifier, 200.0 parts of water, 0.3 part of cumene hydroperoxide and 3.5 parts of divinylbenzene was polymerized in a reactor with stirring at 30°C over a period of 17 hours and then at 50°C for two hours. The resultant latex had a volume average particle size of 80 nm as measured by laser light scattering method in a concentration of about 47% by weight.

The latex was diluted with water, and a mixture of dilute acetic anhydride and ice was added to agglomerate the latex to a volume average substrate particle size of 85 nm. Additional emulsifier (GAFAC-RE 610, GAF Corp.) was added to coat the particle surfaces, and pH was adjusted to within the range of 8-10.

The resultant first stage substrate latex was filtered through cheesecloth. A superstrate stage was grafted via a Redox initiator system. 75.0 parts of a 3:1 mixture of styrene and acrylonitrile were added during a two hour charging period at 65°C with stirring. Concurrently, 0.38 part of cumene hydroperoxide and 0.19 part of sodium formaldehyde sulfoxylate were added. Following the addition of the superstrate monomers and continuing polymerization for 2 additional hours, 1.75 parts of 2,6-di-t-butylphenol was added in an aqueous emulsion as a stabilizer.

The resultant composition was filtered through cheesecloth, was isolated by coagulation with an aqueous magnesium sulfate solution at 80°C-85°C, and was dried in an oven, yielding a free flowing powder.

Properties are summarized in Table 1.

## PROCEDURE B

The method of Procedure A was followed except the agglomeration in a calibrated amount of acetic anhydride and ice which resulted in a volume average substrate particle size of 210 nm.

Properties are summarized in Table 1.

## PROCEDURE C

The method of Procedure A was followed, except the agglomeration in a calibrated amount of acetic anhydride and ice which resulted in a latex volume average substrate particle size of 435 nm.

Properties are summarized in Table 1.

PROCEDURE D

The method of Procedure D is followed, except the agglomeration in a calibrated amount of acetic anhydride and ice which resulted in a volume average substrate particle size of 95 nm and 75.0 parts of methyl(meth)acrylate was substituted for the 3:1 mixture of styrene and acrylonitrile.

Properties are summarized in Table 1.

PROCEDURE E

The method of Procedure D was followed, except the agglomeration in a calibrated amount acetic anhydride and ice which resulted in a volume average substrate particle size of 185 nm.

Properties are summarized in Table 1.

PROCEDURE F

The method of Procedure E was followed, except the agglomeration in a calibrated amount of acetic anhydride and ice which resulted in a volume average substrate particle size of 215 nm and a mixture of 75 parts of methyl(meth)acrylate and 0.75 part of divinylbenzene was substituted for the 3:1 mixture of styrene and acrylonitrile.

Properties are summarized in Table 1.

PROCEDURE G

The method of Procedure D was followed, except the agglomeration in a calibrated amount of acetic anhydride and ice which resulted in a volume average substrate particle size of 430 nm.

Properties are summarized in Table 1.

**TABLE 1**

**Butadiene-Based Substrate Modifiers**

| Procedure | A | B | C | D | E | F | G |
|---|---|---|---|---|---|---|---|
| **Composition** | | | | | | | |
| Substrate | | | | | | | |
| Butadiene | 175.0 | 175.0 | 175.0 | 175.0 | 175.0 | 175.0 | 175.0 |
| Divinylbenzene | 3.5 | 3.5 | 3.5 | 3.5 | 3.5 | 3.5 | 3.5 |
| Butadiene:Divinylbenzene Ratio | 70:1.4 | 70:1.4 | 70:1.4 | 70:1.4 | 70:1.4 | 70:1.4 | 70:1.4 |
| Superstrate | | | | | | | |
| Styrene | 56.25 | 56.25 | 56.25 | - | - | - | - |
| Acrylonitrile | 18.75 | 18.75 | 18.75 | - | - | - | - |
| Methyl(meth)-acrylate | - | - | - | 75 | 75 | 75 | 75 |
| Divinylbenzene | - | - | - | - | - | 0.75 | - |
| Substrate:Superstrate Ratio | 70:30 | 70:30 | 70:30 | 70:30 | 70:30 | 70:30 | 70:30 |
| **Properties** | | | | | | | |
| Particle Size[a] | 85 | 210 | 435 | 95 | 185 | 215 | 430 |
| Swelling Index | 6.7 | 7.5 | 7.9 | 7.0 | 8.2 | 7.8 | 6.5 |
| Grafting Efficiency (%)[b] | 78 | 82 | 77 | - | 80 | 71 | 69 |
| Refractive Index[c] | 1.54 | 1.54 | 1.54 | 1.51 | 1.51 | 1.51 | 1.51 |

TABLE 1 (Cont'd)

a - Volume average mean diameter in the latex form measured by laser light scattering method.

$$b - \left(1 - \frac{\text{wt. of extractable}}{\text{wt. of superstrate comonomer charged}}\right) x\ 100\%$$

after 24 hours. Soxhlet extraction in methyl ethyl ketone

c - Calculated

EXAMPLE 1

A dry blend of 40.7 parts of polyester resin (PBT-poly (1,4-butylene terephthalate) - Valox® 315 - General Electric Co. - Pittsfield, MA), 51.8 parts of polycarbonate resin (poly(bisphenol-A carbonate) - Lexan® 145 - General Electric Co.), 7.5 parts of a modifier prepared by the method of Procedure A, and 0.55 parts of grey pigments (90.9% $TiO_2$; 9.1% Carbon Black) was tumble mixed to give a homogeneous powder/pellet dispersion. The well-mixed dry blend was extruded, dried and injection molded into grey-colored bars and plaques.

Properties are summarized in Table 2.

COMPARATIVE EXAMPLE 1A*

The method of Example 1 was followed substituting a modifier prepared by the method of Procedure D for the modifier.

Properties are summarized in Table 2.

COMPARATIVE EXAMPLE 1B*

The method of Example 1 was followed substituting a diene-based core-shell multi-stage polymer modifier (core = polymerized butadiene, styrene, methyl(meth)acrylate and divinylbenzene - second stage = polymerized styrene - outer shell - polymerized methyl(meth)acrylate and 1,3-butylene glycol dimethacrylate - ACRYLOID® KM 653, according to U.S. Patent No. 4,443,585, Rohm & Haas Company - Philadelphia, PA) for the modifier.

Properties are summarized in Table 2.

COMPARATIVE EXAMPLE 1C*

The method of Example 1 was followed substituting an acrylate-based core-shell multi-stage polymer modifier (core = polybutylacrylate - shell = methyl(meth)acrylate - ACRYLOID® KM 330, also known as PARALOID® KEXL 3330 - Rohm & Haas Company) for the modifier.

Properties are summarized in Table 2.

EXAMPLE 2

The method of Example 1 was followed substituting a modifier prepared by the method of Procedure B for the modifier.

Properties are summarized in Table 2.

COMPARATIVE EXAMPLE 2A*

The method of Example 1 was followed substituting a modifier prepared by the method of Procedure E for the modifier.

Properties are summarized in Table 2.

COMPARATIVE EXAMPLE 2B*

The method of Example 1 was followed substituting a modifier prepared by the method of Procedure F for the modifier.

Properties are summarized in Table 2.

EXAMPLE 3

The method of Example 1 was followed substituting a modifier prepared by the method of Procedure C for the modifier.

Properties are summarized in Table 2.

COMPARATIVE EXAMPLE 3A*

The method of Example 1 was followed substituting a modifier prepared by the method of Procedure G for the modifier.

Properties are summarized in Table 2.

Examples 1-3 and Comparative examples 1A*-3A* demonstrate that modifiers of the present invention impart high impact strength and minimal pearlescence to polyester/ polycarbonate blends. A comparison between Examples 1-3 and Comparative Examples 1A*, 1B*, 2A*, 2B*, and 3A* demonstrate the readily visible significant improvement in pearlescence due to styrene/acrylonitrile superstrate, diene-based modifiers over methyl(meth)acrylate superstrate, butadiene-based modifiers.

Additionally, a comparison of Examples 1-3 with Comparative Example 1C* shows a large reduction in pearlescence due to styrene/acrylonitrile superstrate, butadiene-based modifiers over acrylate-based modifiers.

Examples 1-3 further demonstrate that the modifiers with the smaller particle sizes give the best resistance to gasoline staining, particularly with the smallest particle size being superior.

While the color appearance and gasoline whitening resistance of the compositions of the present invention are improved, other mechanical properties are not sacrificed.

**TABLE 2**

**Pigmented Polyester/Polycarbonate Blends**

| Example | 1 | 1A* | 1B* | 1C* | 2 | 2A* | 2B* | 3 | 3A* |
|---|---|---|---|---|---|---|---|---|---|
| Composition | | | | | | | | | |
| Polyester[a] | 40.7 | 40.7 | 40.7 | 40.7 | 40.7 | 40.7 | 40.7 | 40.7 | 40.7 |
| Polycarbonate[b] | 51.8 | 51.8 | 51.8 | 51.8 | 51.8 | 51.8 | 51.8 | 51.8 | 51.8 |
| Modifier (Vol Av particle size nm) | 7.5[c] (85) | 7.5[d] (95) | 7.5[e] (145) | 7.5[f] (300) | 7.5[g] (210) | 7.5[h] (185) | 7.5[i] (215) | 7.5[j] (435) | 7.5[k] (430) |
| Pigment | 0.55 | 0.55 | 0.55 | 0.55 | 0.55 | 0.55 | 0.55 | 0.55 | 0.55 |
| Properties | | | | | | | | | |
| Notched Izod @ RT (J/M) | 785 | 715 | 680 | 700 | 750 | 765 | 760 | 765 | 785 |
| Ductile/Brittle Transition Temp. (°C)[l] | -30 | -20 | -27 | -15 | -27 | -30 | -34 | -27 | -23 |
| Pearlescence Rating (1-5)[m] | 1 | 2 | 2 | 5 | 1 | 3 | 2 | 1 | 2 |
| Gasoline Whitening (ΔL*ab)[n] | 3.9 | 5.9 | 12.5 | 21.4 | 8.5 | 13.9 | 17.6 | 14.9 | 17.8 |

TABLE 2 (cont'd)

a - poly(1,4-butylene terephthalate) - Valox® 315 - General Electric Co. - Pittsfield, MA.

b - poly(bisphenol-A carbonate) - Lexan® 145 - General Electric Co. - Pittsfield, MA.

c - conjugated diolefin-based substrate-vinyl cyanide/alkenyl aromatic superstrate grafted copolymer - Procedure A.

d - conjugated diolefin-based substrate - methyl(meth)acrylate superstrate grafted copolymer modifier - Procedure D.

e - diene-based core-shell multi-stage polymer modifier - core = polymerized butadiene, styrene, methyl(meth)-acrylate and divinylbenzene - second stage = polymerized styrene - outer shell = polymerized methyl(meth)acrylate and 1,3-butylene glycol dimethacrylate - ACRYLOID® KM 653, also known as PARALOID® EXL 3691 - Rohm & Haas Company - Philadelphia, PA.

f - acrylate-based core-shell multi-stage polymer modifier - core = polybutylacrylate - shell = methyldi(meth)-acrylate - ACRYLOID® KM 330, also known as PARALOID® EXL 3330 - Rohm & Haas Company - Philadelphia, PA.

g - conjugated diolefin-based substrate vinyl cyanide/alkenyl aromatic superstrate grafted copolymer modifier - Procedure B.

h - conjugated diolefin-based substrate - methyl(meth)acrylate superstrate grafted polymer modifier - Procedure E.

i - conjugated diolefin-based substrate - methyl(meth)-acrylate/divinylbenzene superstrate grafted polymer modifier - Procedure F.

j - conjugated diolefin-based substrate-vinyl cyanide/alkenyl aromatic superstrate grafted copolymer modifier - Procedure C.

k - conjugated diolefin-based substrate - methyl(meth)acrylate superstrate grafted copolymer modifier - Procedure G.

l - ductile-brittle transition temperature in Notched Izod testing.

m - color shift from visual rating-1 (best - no shift) to 5 (worst - readily visible color inhomogeneity).

n - color difference between the gasoline immersed and non-immersed portion of a plaque as measured per DIN-6174.

EXAMPLE 4

A dry blend of 80.0 parts of polyester resin (poly(1,4-butylene terephthalate) - Valox® 315 - General Electric Co.) and 20.0 parts of a modifier prepared by the method of Procedure B was tumble mixed to give a homogenous powder/pellet dispersion. The well mixed dry blend was extruded, dried, and injection molded into Izod bars and plaques.

Properties are summarized in Table 3.

COMPARATIVE EXAMPLE 4A*

The method of Example 4 was followed substituting a modifier prepared by the method of Procedure E for the modifier.

Properties are summarized in Table 3.

COMPARATIVE EXAMPLE 4B*

The method of Example 4 was followed substituting a diene-based core-shell multi-stage polymer modifier (core = polymerized butadiene, styrene, methyl(meth)acrylate and divinylbenzene - second stage = polymerized styrene - outer shell = polymerized methyl(meth)acrylate and 1,3-butylene glycol dimethacrylate - ACRYLOID® KM 653, according to U.S. Patent No. 4,443,585 - Rohm & Haas Company) for the modifier.

Properties are summarized in Table 3.

Example 4 and Comparative Examples 4A* and 4B* demonstrate that because S/AN superstrates are more compatible with PBT than are methyl (meth)acrylate superstrates, impact strength improves. Furthermore, within a similar range of the rubber particle size, S/AN superstrate, diene rubber-based modifiers impart ductility in the PBT matrix at both room temperature and at low temperature, while MMA superstrate counterparts perform poorly, particularly at low temperature.

TABLE 3

Polyester Blends

| Example | 4 | 4A* | 4B* |
|---|---|---|---|
| **Composition** | | | |
| Polyester[a] | 80 | 80 | 80 |
| Modifier (Vol Av Particle Size nm) | 20[b] (210) | 20[c] (185) | 20[d] (145) |
| **Properties** | | | |
| Notched Izod (ft-lbs/in) | | | |
| @ Room Temperature | 20 | 4.2 | 15 |
| -40°C | 18 | 1.7 | 6.1 |

a - poly(1,4-butylene terephthalate) - Valox® 315 - General Electric Co. - Pittsfield, MA.

b - conjugated diolefin-based substrate-vinyl cyanide/alkenyl aromatic superstrate grafted copolymer modifier - Procedure B.

c - conjugated diolefin-based substrate - methyl(meth)acrylate superstrate grafted copolymer modifier - Procedure E.

d - diene-based core-shell multi-stage polymer modifier - core = polymerized butadiene, styrene, methyl(meth)-acrylate and divinylbenzene - second stage = polymerized styrene - outer shell = polymerized methyl(meth)acrylate and 1,3-butylene glycol dimethacrylate - ACRYLOID® KM 654, also known as PARALOID® EXL 3691 - Rohm & Haas Company - Philadelphia, PA).

All patents and applications mentioned above are hereby incorporated by reference.

Many variations of the present invention will suggest themselves to those skilled in this art in light of the above, detailed description. For example, organic or inorganic fillers or reinforcing agents can be added to the compositions of the present invention. All such obvious variations are within the full intended scope of the appended claims.

## Claims

1. An impact resistant and gasoline staining resistant composition comprising :
(A) a polyester resin, a polycarbonate resin or a mixture thereof; and
(B) a conjugated diolefin-based substrate-vinyl cyanide/alkenyl aromatic superstrate grafted copolymer having an agglomerated substrate with a volume average mean diameter ranging from about 80 nm to about 450 nm.

2. An impact resistant, gasoline staining resistant, reduced pearlescence composition comprising :
(A) a polyester resin, a polycarbonate resin or a mixture thereof;
(B) a conjugated diolefin-based substrate-vinyl cyanide/alkenyl aromatic superstrate grafted copolymer having an agglomerated substrate with a volume average mean diameter ranging from about 80 nm to about 450 nm; and
(C) a pigment or a combination of pigments.

3. A composition as defined in Claim 1 or Claim 2 wherein said polyester resin comprises the reaction product of a dicarboxylic acid and a glycol.

4. A composition as defined in any preceding claim wherein said polyester resin comprises poly(1,4-butylene terephthalate).

5. A composition as defined in any preceding claim wherein said polycarbonate resin comprises the reaction product of (1) a dihydroxydiarylalkane, (2) a polyhydroxypolyarylalkane, or a mixture of (1) and (2), and (3) either (a) phosgene or (b) a diester of carbonic acid.

6. A composition as defined in any preceding claim wherein said polycarbonate resin comprises poly(bisphenol-A carbonate).

7. A composition as defined in any preceding claim wherein said graft copolymer comprises a terpolymer of acrylonitrile, butadiene, and styrene.

8. A composition as defined in any preceding claim wherein said terpolymer has a styrene to acrylonitrile ratio ranging from about 5:1 to about 2:1 and a butadiene to styrene/acrylonitrile ratio from 6:4 to 9:1.

9. A composition as defined in any preceding claim wherein said substrate comprises a butadiene polymer.

10. A composition as defined in any preceding claim wherein said superstrate comprises styrene and acrylonitrile monomers.

11. A composition as defined in any preceding claim wherein said volume average mean diameter ranges from about 80 nm to less than 220 nm.

12. A composition as defined in Claim 11 wherein said volume average mean diameter ranges from about 80 nm to less than 100 nm.

13. A composition as defined in Claim 10 or Claim 11 wherein said volume average mean diameter is about 85 nm.

14. A composition as defined in any preceding claim wherein component (A) comprises from about 5 to about 95 parts by weight and component (B) comprises from about 95 to about 5 parts by weight based upon 100 parts by weight of (A) and (B) combined.

15. A composition as defined in any preceding claim wherein component (A) comprises from about 80 to about 95 parts by weight and component (B) comprises from about 20 to about 5 parts by weight based upon 100 parts by weight of (A) and (B) combined.

16. A composition as defined in Claim 1 wherein said grafted copolymer includes a reactive UV screener, a non-reactive UV screener, or a combination thereof.

17. An article extruded, molded or thermoformed from a composition as defined in any preceding claim.

European Patent Office

# EUROPEAN SEARCH REPORT

Application Number

EP 92 30 8851

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X<br><br><br><br>D | EP-A-0 022 216 (BAYER AG)<br>* claims 1-9 *<br>* table, examples 2-9 *<br>* page 6, line 16 - line 21 *<br>& US-A-4 292 233 | 1-4,7-10,14-15 | C08L67/02<br>C08L69/00<br>C08L55/02 |
| A | PATENT ABSTRACTS OF JAPAN<br>vol. 13, no. 384 (C-629)(3732) 24 August 1989<br>& JP-A-01 132 660 ( DAICEL CHEM IND LTD ) 25 May 1989<br>* abstract * | 1,3-10,14-15,17 | |
| A | CHEMICAL ABSTRACTS, vol. 89, no. 4, 24 July 1978, Columbus, Ohio, US;<br>abstract no. 25313e,<br>page 36 ;column 1 ;<br>& JP-A-78 07 757 (SUMITOMO NAUGATUCK CO., LTD.) 24-01-1978<br>* abstract * | 1,5-10,14-15,17 | |
| A | EP-A-0 360 074 (BAYER AG)<br>* claims 1-4 *<br>* examples *<br>* table 3 * | 1,5,7-10,14-15,17 | TECHNICAL FIELDS SEARCHED (Int. Cl.5 )<br><br>C08L |
| D,A | DATABASE WPIL<br>Derwent Publications Ltd., London, GB;<br>AN 87-267482 (38)<br>& JP-A-62 185 743 (TEIJIN CHEMICALS KK) 14 August 1987<br>* abstract * | 2-7,14-15,17 | |
| P,A | EP-A-0 494 602 (MILES INC.)<br>* claim 1 *<br>* page 3, line 3 - page 4, line 16 *<br>* page 4, line 24 - page 5, line 54 * | 2,5-10,14-15 | |

The present search report has been drawn up for all claims

| Place of search | Date of completion of the search | Examiner |
|---|---|---|
| THE HAGUE | 12 FEBRUARY 1993 | Kathryn Y.-P. Miao |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)